# EUROPEAN PATENT APPLICATION

(11) **EP 3 815 515 A1**
(43) Date of publication of application: **05.05.2021**
(21) Application number: 19825889.9
(22) Date of filing: 18.06.2019
(51) Int. Cl.: A01G 13/02

(54) **MULCHING SHEET FOR CROPS**

(30) Priority: 29.06.2018 ES 201831010 U
(71) Applicant: Smurfit Kappa Navarra, S.A., 31191 Cordovilla Navarra (ES)
(72) Inventor: URDACI UCEDA, Iñaki, 31191 Cordovilla (Navarra) (ES); MENDAROZKETA GÓMEZ, Pedro, 31191 Cordovilla Navarra (ES)
(74) Representative: Gonzalez Palmero, Fé
(86) International application number: PCT/ES2019/070421
(87) International publication number: WO 2020/002728

(57) **Abstract**

Film for covering crops, formed by a laminar body arranged on the soil of a crop, operating as a thermal barrier and a weed barrier, made of crumpled long fibre kraft paper, which has a certain elasticity and deformability, making it possible to install the film without risking breakages.

## Description

### OBJECT OF THE INVENTION

The present invention refers to a film for covering crops of the type used for preventing weeds from growing among the produce to be cultivated, and for retaining the heat in the soil.

The object of the invention is to provide a covering film that is completely biodegradable, that contributes to enrich and improve the quality of the soil for future crops, that is effective as a thermal barrier and a weed barrier, and that has the necessary resistance to be used comfortably without risking breakage.

### BACKGROUND OF THE INVENTION

The technique known as "mulching", which is known in the field of the practical application of the invention, consists of placing a protective covering on the terrain to be cultivated in order to retain the heat of the soil, which makes it possible to sow and transplant certain harvests early, and it also stimulates faster growth.

As the season progresses, the mulch has different effects on the ground: it stabilises the temperature by preventing heat fluctuations during variable summer conditions; it stabilises humidity by reducing evaporation; it helps control blights by preventing weeds from germinating due to the lack of sunlight, etc.

Plastic films are used for this purpose, which represent a significant environmental problem as is commonly known, and therefore their usage is undesirable since they are also very expensive to remove, in addition to the damage they cause to the environment due to being products that cannot be recycled.

### DESCRIPTION OF THE INVENTION

The film for covering crops described completely solves the drawback mentioned above with a simple but effective solution.

In order to do so, instead of being made of plastic as is the common the practice, the film of the invention is made of virgin wood fibre from pine trees, which results in a type of kraft paper.

Since this material can be too delicate to handle, the film has been designed to be produced as crumpled paper subjected to a treatment of surface deformation in order to provide the film with certain elasticity and deformability, which makes it possible to install the film without risking breakages.

The vegetable nature of the film means it is not only biodegradable, but also acts as compost during said process of biodegradation, contributing to enrich and improve the quality of the soil for future crops.

The film of the invention will be supplied in rolls so it can be easily applied on the necessary cultivation surfaces in a completely analogous way as with conventional plastic films, providing an equivalent thermal barrier as well as a weed barrier, in addition to providing the aforementioned environmental advantages.

### DESCRIPTION OF THE DRAWINGS

To complete the invention described below and in order to give a better understanding of the characteristics of the invention, according to a preferred embodiment thereof, this description is accompanied by a set of drawings in which the figures described below have been represented, for purely illustrative purposes and should not be construed as limiting:
Figure 1.- Shows a schematic view of the process for obtaining a film for covering crops designed according to the object of the present invention.
Figure 2.- Shows a plan view of a film obtained using the process of the previous drawing.
Figure 3.- Shows a cross-section view of a crop where the film of the previous drawing is applied.

### PREFERRED EMBODIMENT OF THE INVENTION

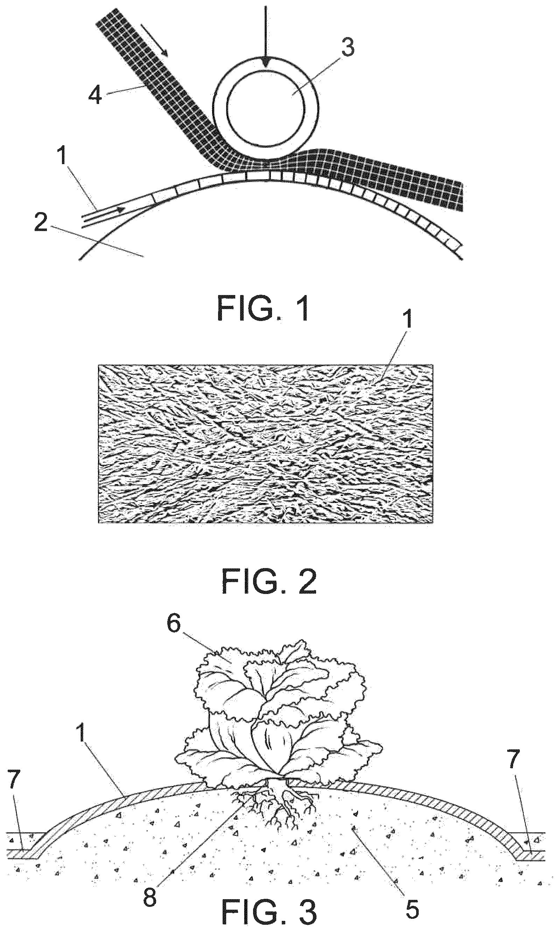

In light of the drawings described above, it can be observed how the film for covering crops is obtained from paper sheet (1) that is subjected to a process of crumpling, so that during the process for obtaining said sheet, that is, when it still has a certain level of humidity around 63%, it is fed through a pair of rollers, more specifically a drying roller (2) and a pressure roller (3), with the particularity that the paper sheet (1) is fed through a rubber sheet (4) located between said rollers, and said rubber sheet (4) is significantly thicker than the space defined between the rollers (2 and 3), which causes the rubber band (4) to suffer elastic deformation affecting the movement of the paper sheet (1), so that said sheet is subjected to a process of crumpling, obtaining in this way a sheet with a similar aspect to the one shown in Figure 2, so that said sheet comprises a series of folds that make it possible to stretch the sheet to a certain extent, which provides it with enough flexibility in order to use said sheet without breaking it whilst handling the sheet.

In this way, and according to Figure 3, the sheet (1) can be adapted to the width of the rows (5) of the produce (6) to be cultivated, burying the sheet on the lateral ends (7) thereof, and making it possible create windows (8), as is common practice in this type of cultivation, providing the aforementioned advantages since it is a completely biodegradable material, which, in addition to the benefits provided by conventional films for covering crops, such as being a thermal barrier and a weed barrier, it also acts as compost when it breaks down naturally, thus improving the quality of the soil where it is installed and therefore producing a positive effect for the environment, as opposed to what happens with conventional films for covering crops.

## Claims

1. Film for covering crops of the type comprised of a laminar body arranged on the soil of a crop, operating as a thermal barrier and a weed barrier, **characterised in that** it is made of crumpled long fibre kraft paper.

2. Film for covering crops, according to claim 1, **characterised in that** the kraft paper is obtained from virgin wood fibre from pine trees.
